# DEMANDE DE BREVET EUROPEEN

(11) **EP 1 978 713 A1**
(43) Date de publication de la demande: **08.10.2008**
(21) Numéro de dépôt: 08103057.9
(22) Date de dépôt: 28.03.2008
(51) Int. Cl.: H04L 29/06

(54) **SYSTÈME DE CONTRÔLE DE SESSION DE TRANSMISSION DE CONTENUS ENTRE UN SERVEUR DE CONTENUS ET UN TERMINAL CONNECTÉ À UN RÉSEAU CELLULAIRE À COUVERTURE RADIO DISCONTINUE ET À MÉCANISME DE TRANSFERT DISCONTINU DE CONTENUS**

(30) Priorité: 05.04.2007 FR 0754310
(71) Demandeur: Alcatel Lucent, 75008 Paris (FR)
(72) Inventeur: Faucheux, Fréderic, 75015, PARIS (FR); Bizouarn, Erick, 92160, ANTONY (FR); Alberi-Morel, Marie Line, 94230, CACHAN (FR)
(74) Mandataire: El Manouni, Josiane

(57) **Abrégé**

Un système est dédié au contrôle de session(s) de transmission de contenus entre un serveur de contenus (SC) et au moins un terminal de communication radio (UE) qui dispose d'une application (LC) utilisant des contenus et qui est connecté à un réseau de communication radio (RR) à couverture radio discontinue et mettant en oeuvre un mécanisme de transfert discontinu de contenus. Ce système comprend des premier (D1) et second (D2) dispositifs respectivement implantés dans le terminal (UE) et dans le réseau (RR) et chargés, lorsqu'une session de transmission de contenus doit être établie entre l'application (LC) et le serveur de contenus (SC), de se connecter l'un à l'autre et de se faire passer respectivement pour le serveur de contenus (SC) auprès de l'application (LC), afin de continuer à lui transmettre des blocs de données de contenu en cas d'interruption de transfert, et pour l'application (LC) auprès du serveur de contenus (SC), afin d'établir la session à sa place, de transmettre au serveur de contenus (SC) des messages relatifs à la session, de stocker temporairement des blocs de données de contenu transmis en cas d'interruption de transfert et pour transférer ces blocs vers le premier dispositif (D1) dès que cette interruption de transfert se termine, afin qu'il les transfère à son tour vers l'application (LC).

## Description

L'invention concerne les réseaux de communication radio à couverture radio discontinue et mettant en oeuvre un mécanisme de transfert discontinu de contenus, et plus précisément le contrôle des sessions de transmission de contenus non interactifs, entre autres multimédia, entre un serveur de contenus et au moins un terminal de communication radio connecté à un réseau radio du type précité.

On entend ici par « réseau de communication radio à couverture radio discontinue » un réseau d'accès radio dans lequel la qualité de réception (ou qualité du lien radio) varie en fonction de la position au sein de la zone de couverture radio. Il est rappelé que la qualité de réception (ou qualité du lien radio) est quantifiable au moyen de paramètres comme par exemple le CIR (pour « Carrier to Interference Ratio » - rapport entre la puissance du signal reçu et la somme des puissances du bruit interne du récepteur et du bruit d'interférence provoqué par l'environnement) ou le BER (« Bit Error Rate » - taux d'erreur de bits par paquet reçu) ou encore le PER (pour « Packet Error Rate » - taux de paquets erronés reçus). En présence de telles discontinuités de la qualité de réception, il est donc possible de décomposer la zone de couverture radio en sous-zones de niveaux de qualité de réception moyens différents.

Par ailleurs, on entend ici par « mécanisme de transfert discontinu de contenus » un mécanisme consistant à favoriser le transfert de contenus vers les terminaux mobiles qui les requièrent lorsque ces derniers se trouvent momentanément situés dans les sous-zones dont le niveau de qualité de réception moyen est le plus élevé, lesquelles constituent une zone généralement appelée « zone de transfert ». Plus précisément, lorsqu'une application d'un terminal mobile a requis un contenu, ce dernier lui est transmis selon un débit qui est très supérieur à son débit normal d'utilisation par l'application requérante lorsque ledit terminal mobile se trouve momentanément situé dans une zone de transfert. Le terminal mobile (ou l'application requérante) comprend alors une mémoire tampon (ou cache) dans laquelle il (elle) stocke temporairement le contenu transféré selon un haut débit, ce qui permet de continuer d'alimenter l'application en contenu lorsque ledit terminal mobile quitte la zone de transfert et se retrouve momentanément dans une sous-zone où le transfert de contenu n'est en principe pas autorisé. On notera que le mécanisme autorise malgré tout les tentatives de transfert de contenu en dehors des zones de transfert lorsqu'un niveau élevé de qualité de service (QoS) doit être garanti. On notera également que ce mécanisme, qui est notamment décrit dans le document brevet EP 1549096, nécessite la connaissance des informations relatives à la mobilité des terminaux mobiles.

De plus, dans ce qui suit on entend par « terminal de communication radio » tout équipement de communication capable d'échanger des données par voie d'ondes, sous la forme de signaux, avec un autre équipement (éventuellement de réseau) via le réseau (de communication) radio auquel il est rattaché. Il pourra donc s'agir, par exemple, d'un téléphone mobile, ou d'un assistant personnel numérique (ou PDA) ou d'un ordinateur portable équipé d'un dispositif de communication radio.

Lorsqu'une session a été établie entre une application d'un terminal (de communication) radio et un autre équipement, comme par exemple un serveur de contenus, en vue d'un transfert de contenu(s), cette application et cet autre équipement doivent se transmettre des blocs de données de contenu (comme par exemple des paquets) selon un protocole de transport (comme par exemple RTP (pour « Real-time Transport Protocol »)) et des messages de signalisation selon un protocole de contrôle (comme par exemple RTCP (pour « Real time Transport Control Protocol »)), par exemple afin de signaler si les blocs de données de contenu ont bien été reçus.

Lorsque le terminal radio est en dehors d'une zone de transfert et qu'il a intégralement transféré vers l'application les blocs de données de contenu stockés dans sa mémoire tampon (ou cache) de contenus, l'application doit attendre que la suite du contenu lui soit communiquée. Or, de nombreuses applications ne supportent pas que la durée qui sépare deux réceptions successives de blocs de données de contenus soit trop importante. La durée maximale d'attente varie généralement entre quelques secondes et 1 minute. Par conséquent, lorsqu'une application n'a pas reçu de nouveau bloc de données de contenu pendant une durée supérieure à son délai maximal d'attente, elle considère que son terminal radio n'est plus dans la couverture radio du réseau radio, et donc elle peut provoquer l'arrêt de la session. Une nouvelle session doit alors être établie.

Par ailleurs, le serveur de contenu ne sachant pas quand un terminal radio est dans une zone de transfert, il lui transmet le(s) contenu(s) qu'il a requis sans se préoccuper de savoir s'il est en mesure de le recevoir. Par conséquent, dès que survient une interruption (ou discontinuité) de transfert, les blocs de données de contenu qui ont été transmis par le serveur pendant cette interruption sont perdus ou risquent d'être perdus.

L'invention a donc pour but de remédier à tout ou partie des inconvénients précités.

Elle propose à cet effet un système dédié au contrôle de session(s) de transmission de contenu(s) entre un serveur de contenus et au moins un terminal (de communication) radio disposant d'une application (comme par exemple un lecteur multimédia) utilisant des contenus et connecté à un réseau (de communication) radio à couverture radio discontinue et mettant en oeuvre un mécanisme de transfert discontinu de contenus.

Ce système se caractérise par le fait qu'il comprend des premier (D1) et second (D2) dispositifs respectivement implantés dans le terminal radio et dans le réseau radio et chargés, lorsqu'une session de transmission de contenus doit être établie entre l'application et le serveur de contenus, de se connecter l'un à l'autre et de se faire passer respectivement pour le serveur de contenus auprès de l'application, afin de continuer à lui transmettre des blocs de données de contenu en cas d'interruption (ou discontinuité) de leur transfert, et pour l'application auprès du serveur de contenus, afin d'établir la session à sa place, de transmettre au serveur de contenus des messages relatifs à cette session, et de stocker temporairement des blocs de données de contenu transmis par le serveur de contenus en cas d'interruption de transfert et pour transférer ces blocs stockés vers le premier dispositif dès que cette interruption de transfert se termine, pour qu'il les transfère à son tour vers l'application.

Le système selon l'invention peut comporter d'autres caractéristiques qui peuvent être prises séparément ou en combinaison, et notamment :
- son second dispositif comprend une mémoire propre à stocker temporairement des blocs de données de contenu transmis par le serveur de contenus, et des moyens de contrôle qui peuvent être chargés, en cas de détection d'une interruption de transfert pour le terminal, d'ordonner le stockage dans cette mémoire des blocs de données de contenu transmis par le serveur de contenus, et en cas de détection de la fin de cette interruption de transfert, d'extraire certains au moins des blocs de données de contenu stockés dans la mémoire afin d'ordonner leur transfert selon un débit élevé vers le premier dispositif ;
   ➢ son second dispositif peut comprendre des moyens de détection chargés d'analyser l'état de la connexion entre les premier et second dispositifs et d'alerter ses moyens de contrôle en cas de détection d'un début ou d'une fin d'interruption de transfert ;
- son premier dispositif comprend une mémoire propre à stocker temporairement des blocs de données de contenu issus du serveur de contenus, et des moyens de synchronisation qui peuvent être chargés, en cas de réception de blocs de données de contenu consécutivement à une interruption de transfert, de transférer vers l'application les blocs de données de contenu qui doivent être utilisés en premier, et de stocker temporairement dans la mémoire les autres blocs de données de contenu reçus, afin de lui transférer une partie au moins d'entre eux lorsque sa mémoire tampon est en mesure de les stocker ;
   ➢ les moyens de synchronisation peuvent être chargés, en cas de réception de blocs de données de contenu transmis selon un débit élevé, de transférer une partie au moins de ces blocs de données de contenu vers l'application compte tenu de la capacité de stockage de sa mémoire tampon, puis de stocker temporairement dans la mémoire les blocs de données de contenu suivants afin de les transférer vers l'application, en commençant par ceux qui doivent être utilisés en premier ;
   ➢ en variante ou en complément, les moyens de synchronisation peuvent être chargés de transférer des blocs de données de contenu vers l'application selon un débit égal à leur débit d'utilisation normal dans l'application ;
   ➢ en variante ou en complément, les moyens de synchronisation peuvent être chargés de transférer des blocs de données de contenu vers l'application selon un débit strictement supérieur à leur débit d'utilisation normal dans l'application ;
   ➢ en variante ou en complément, les moyens de synchronisation peuvent être chargés, en présence de contenus transmis en direct, de ne transférer vers l'application que les blocs de données de contenu qu'elle peut utiliser en quasi-synchronisme avec le serveur de contenus ;
   ➢ les moyens de synchronisation peuvent être chargés, en cas d'interruption de transfert, de générer des blocs de données de contenu factices à destination de l'application, afin qu'elle n'interrompe pas la session et qu'elle effectue une action représentative de l'interruption de transfert ;
   ➢ les moyens de synchronisation peuvent être chargés de transférer vers l'application des copies de certains au moins des blocs de données de contenu qui sont stockés dans la mémoire et d'adjoindre un marquage choisi à chaque bloc de données de contenu qui est stocké dans la mémoire et qui a fait l'objet d'une copie, afin de pouvoir retransmettre sur ordre à l'application certains au moins des blocs de données de contenu marqués.

L'invention propose également un terminal de communication radio équipé d'un premier dispositif faisant partie d'un système de contrôle du type de celui présenté ci-avant.

L'invention propose également un équipement de réseau destiné à faire partie d'un réseau de communication radio et équipé d'un second dispositif faisant partie d'un système de contrôle du type de celui présenté ci-avant.

L'invention est particulièrement bien adaptée, bien que de façon non exclusive, aux terminaux de communication radio pouvant se connecter à un réseau de téléphonie mobile, car elle peut s'interfacer facilement avec les protocoles et standards existants.

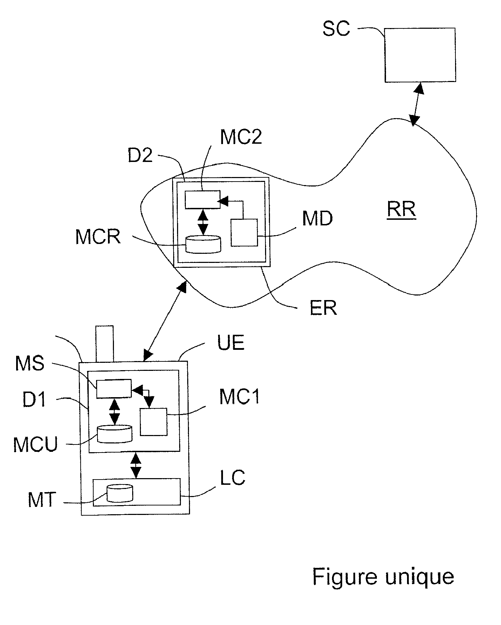

D'autres caractéristiques et avantages de l'invention apparaîtront à l'examen de la description détaillée ci-après, et du dessin annexé, sur lequel l'unique figure illustre de façon très schématique un exemple de réalisation d'un système de contrôle selon l'invention implanté en partie dans un téléphone mobile connecté à un réseau de téléphonie mobile (auquel est connecté un serveur de contenus) et en partie dans un équipement de réseau dudit réseau de téléphonie mobile. Le dessin annexé pourra non seulement servir à compléter l'invention, mais aussi contribuer à sa définition, le cas échéant.

L'invention a pour objet de permettre qu'en cas d'interruption (ou discontinuité) de transfert de contenu(s) vers un terminal de communication radio UE, connecté à un réseau de communication radio RR, la session ne soit pas interrompue et qu'aucun bloc de données de contenu ne soit perdu.

Dans ce qui suit, on considère à titre d'exemple non limitatif que le réseau de communication radio RR est un réseau de téléphonie cellulaire (ou mobile). Mais, l'invention n'est pas limitée à ce type de réseau de communication radio. Elle concerne en effet tous les réseaux de communication radio à couverture radio discontinue (et donc comprenant un réseau d'accès radio dans lequel la qualité de réception (ou qualité du lien radio) varie en fonction de la position au sein de la zone de couverture radio) et mettant en oeuvre un mécanisme de transfert discontinu de contenus.

Par ailleurs, dans ce qui suit on entend par «terminal de communication radio » tout équipement de communication muni d'une application utilisant des contenus non interactifs (éventuellement multimédia) et capable d'échanger des données sous la forme de signaux radio avec une station de base ou un point d'accès d'un réseau d'accès radio d'un réseau radio. Il pourra donc s'agir, par exemple, d'équipements d'utilisateurs, tels que des téléphones mobiles (ou cellulaires) ou des ordinateurs portables ou des assistants personnels numériques (ou PDA) munis d'un équipement de communication radio.

On considère dans ce qui suit que les terminaux de communication radio sont des téléphones mobiles (UE) équipés d'une application LC dédiée à la lecture de contenus définissant des vidéos, par exemple au format MPEG4. L'application se présente donc sous la forme d'un lecteur (éventuellement enregistreur), plus connu sous l'expression anglaise « media player », chargé de diffuser des vidéos reçues sur l'écran du téléphone mobile UE.

On notera que l'invention n'est pas limitée à ce type d'application LC. Elle concerne en effet toute application utilisant tout type de contenu (multimédia ou non) transmis sous la forme de blocs de données (par exemple des paquets, éventuellement de type IP) et provenant d'un serveur de contenus SC connecté au réseau radio RR auquel est connecté le téléphone mobile UE qui la contient, ou qui est joignable via ce réseau radio RR. A titre d'exemple non limitatif, le serveur de contenus SC peut être un serveur IP.

Un réseau (de téléphonie) mobile RR (par exemple de type GSM) peut, d'une façon très schématique mais néanmoins suffisante à la compréhension de l'invention, être résumé à un coeur de réseau (ou « Core Network » en anglais) couplé à un réseau d'accès radio (appelé BSS), lui-même raccordé à un système de gestion de réseau ou NMS (pour « Network Management System »).

Le réseau d'accès radio comporte principalement des stations de base (appelées BTS) et des contrôleurs de réseau radio ou noeuds (appelés BSCs), raccordés entre eux.

Chaque station de base est associée à au moins une cellule (logique) couvrant une partie de la zone de couverture radio du réseau radio et dans laquelle des terminaux mobiles UE peuvent établir (ou poursuivre) des liaisons radio, et notamment recevoir des contenus transmis (éventuellement en mode diffusion (ou « broadcast »)). Chaque contrôleur de réseau radio est associé à au moins une cellule (logique) et est donc couplé à au moins une station de base.

Le réseau d'accès radio ayant une couverture radio discontinue, sa zone de couverture radio comporte des sous-zones qui constituent une zone appelée zone de transfert et dans lesquelles le niveau de qualité de réception moyen est le plus élevé et où le transfert discontinu de contenus est autorisé.

Le coeur de réseau comprend des équipements de réseau qui pour certains sont raccordés notamment aux contrôleurs de réseau radio, et qui, pour certains, assurent sa connexion à un réseau de services (par exemple de type IP) matérialisant les services mis à la disposition des utilisateurs des terminaux mobiles UE par l'opérateur du réseau GSM, et en particulier les services de diffusion de contenus (comme par exemple des données multimédia constituant des vidéos).

L'invention propose un système destiné à contrôler les sessions de transmission de contenus entre un serveur de contenus SC (faisant partie du (ou connecté au) réseau de services) et au moins un téléphone mobile UE connecté au réseau radio RR, en présence d'interruptions (ou discontinuités) de transfert de contenu(s).

Comme illustré sur l'unique figure, ce système comprend essentiellement des premier(s) D1 et second D2 dispositifs. Chaque premier dispositif D1 est implanté dans un téléphone mobile UE, tandis que le second dispositif D2 est implanté dans le réseau radio RR.

On notera que dans l'exemple illustré le second dispositif D2 est implanté dans un équipement de réseau ER du réseau radio RR, comme par exemple une station de base (BTS ou Node B), un contrôleur de station de base (RNC ou BSC), un serveur de service ou un équipement du coeur de réseau, éventuellement de type IMS (pour « IP Multimedia Subsystem » - comme un équipement intermédiaire (ou « proxy ») de type CSCF (pour « Call Session Control Function »)). Mais, cela n'est pas obligatoire. Il peut en effet constituer un équipement de réseau dédié. D'une manière générale, le second dispositif D2 selon l'invention peut être implanté soit dans un réseau d'accès radio, soit dans un coeur de réseau.

Un premier dispositif D1 et le second dispositif D2 interviennent conjointement chaque fois qu'une session de transmission de contenus (non interactifs) doit être établie entre l'application LC (implantée dans le téléphone mobile UE) et le serveur de contenus SC. Plus précisément, lorsque l'application LC veut établir une session avec un serveur de contenus SC, elle génère une requête d'établissement de session demandant le transfert d'au moins un contenu (par exemple une vidéo), et demande à son téléphone mobile UE de transmettre cette requête vers sa destination, via son réseau radio de rattachement RR. Cette requête est alors interceptée par le premier dispositif D1, lequel comprend par exemple à cet effet un premier module de contrôle MC1. A partir de cette interception, le premier module de contrôle MC1 est chargé de faire passer le premier dispositif D1 pour le serveur de contenus SC auprès de l'application LC.

Le premier module de contrôle MC1 ordonne ensuite à son premier dispositif D1 d'établir une connexion avec le second dispositif D2 pour lui transmettre la requête. A réception de cette requête, le second dispositif D2 la transmet à un second module de contrôle MC2 qu'il comprend et qui est chargé de le faire passer pour l'application LC auprès du serveur de contenus SC.

Puis, le second module de contrôle MC2 ordonne ensuite à son second dispositif D2 de transmettre la requête au serveur de contenus SC afin qu'une session soit établie entre le second dispositif D2 (qui s'est substitué à l'application LC) et le serveur de contenus SC.

Une fois la session établie, le serveur de contenus SC peut alors transmettre au second dispositif D2 les blocs de données qui définissent le(s) contenu(s) désigné(s) dans la requête. Le second dispositif D2 n'étant pas concerné par une éventuelle interruption (ou discontinuité) de transfert de contenu(s) vers des terminaux mobiles UE, il peut recevoir l'intégralité du (des) contenu(s) demandé(s) par l'application LC, et échanger des messages de signalisation avec le serveur de contenus SC, comme par exemple des rapports de réception de contenu.

A titre d'exemple, on peut utiliser le protocole de transport RTP (pour « Real-time Transport Protocol ») pour transporter (transmettre) les blocs de données (ou paquets) de contenu dans le cadre d'une session, et le protocole de contrôle RTCP (pour « Real time Transport Control Protocol ») pour l'échange de messages de signalisation relatifs à cette session. Dans ce cas, les rapports de réception de contenu sont désignés sous l'acronyme anglais RR (pour « Receiver Report »)).

Si le téléphone mobile UE est dans une zone de transfert du réseau radio RR, et donc qu'il est en mesure de recevoir des blocs de données dudit réseau radio RR selon un haut débit, le second module de contrôle MC2 ordonne à son second dispositif D2 de transférer (en haut débit) vers le premier dispositif D1, via le réseau radio RR, les blocs de données de contenu qui proviennent du serveur de contenus SC. A réception de ces blocs de données de contenu, le premier dispositif D1 peut les transférer vers l'application LC qui les a requis.

Si à un instant donné le téléphone mobile UE n'est plus dans une zone de transfert du réseau radio RR, le réseau radio RR ne permet pas que l'on continue de lui transmettre des blocs de données de contenu. Par conséquent, le téléphone mobile UE fait l'objet d'une interruption (ou discontinuité) de transfert de contenu(s). Le second module MC2 du second dispositif D2 en est alors averti, et il se met à stocker temporairement les blocs de données de contenu transmis par le serveur de contenus SC, par exemple dans une (seconde) mémoire MCR de son second dispositif D2.

Cette seconde mémoire MCR est par exemple de type cache. Dans ce cas, le second dispositif D2 constitue ce que l'homme de l'art appelle en anglais un « proxy/cache » (équipement intermédiaire à mémoire cache).

La détection des interruptions de transfert de contenu(s) vers le téléphone mobile UE peut être assurée au niveau du protocole radio par un module de détection MD qui fait partie du réseau radio RR (par exemple de son réseau d'accès radio) ou bien du second dispositif D2, comme c'est le cas dans l'exemple non limitatif illustré sur l'unique figure.

Quel que soit le lieu d'implantation du module de détection MD, ce dernier est chargé d'analyser l'état de la connexion établie entre un premier dispositif D1 et le second dispositif D2 dans le cadre d'une session, et d'alerter le second module de contrôle MC2 chaque fois qu'il détecte le début ou la fin d'une interruption de transfert de contenu(s) vers le téléphone mobile UE impliqué dans cette connexion.

Grâce à ce stockage temporaire des blocs de données de contenu dans la seconde mémoire MCR, en particulier pendant une interruption de transfert de contenu(s) vers le téléphone mobile UE, dès que le second module de contrôle MC2 est averti de la fin de cette interruption, il est en mesure d'extraire des blocs de données de contenu stockés afin que son second dispositif D2 les transfère vers le premier dispositif D1. Ce dernier peut alors les transférer à son tour, au moins partiellement, vers l'application LC qui les a requis.

On notera que pendant la durée de l'interruption de transfert de contenu(s) vers le téléphone mobile UE, dès que le premier dispositif D1 ne dispose plus de blocs de données de contenu à communiquer à l'application LC, il peut par exemple lui adresser des blocs de données de contenu factices afin qu'elle ne requière pas l'arrêt de la session en cours.

Le premier dispositif D1 comprend à cet effet un module de synchronisation MS qui est averti par le téléphone mobile UE chaque fois qu'il a détecté le début ou la fin d'interruption d'un transfert de contenu(s).

Par exemple, les blocs de données de contenu factices sont générés par le module de synchronisation MS afin d'interdire à l'application LC d'interrompre la session en cours et de lui demander d'effectuer, en attendant la fin de l'interruption, une action représentative de cette interruption. A titre d'exemple, l'action peut consister à afficher une image fixe ou une séquence d'images sur l'écran du téléphone mobile UE, accompagnée éventuellement d'un message textuel et/ou d'un message audio (alors diffusé par le haut-parleur du téléphone mobile UE). L'image fixe ou la séquence d'images peut être soit dédiée, soit constituée par les derniers blocs de données de contenu (non factices) reçus.

On notera que le module de contrôle MC2 du second dispositif D2 peut demander au serveur de contenus SC de lui transmettre les blocs de données de contenu selon un débit élevé. En raison du mode de transfert discontinu qui est mis en oeuvre, le module de contrôle MC2 ordonne à son second dispositif D2 de transférer vers le premier dispositif D1, selon un débit élevé, les blocs de données de contenu extraits de la seconde mémoire MCR. On entend ici par « débit élevé » un débit supérieur au débit d'utilisation normal des blocs de données de contenu par l'application LC. Mais, le transfert du serveur de contenus SC vers le second dispositif D2 peut également se faire selon le débit d'utilisation normal des blocs de données de contenu par l'application LC. C'est notamment le cas lors du transfert de contenus en direct (ou « live content »).

On notera également qu'il est particulièrement avantageux que le premier dispositif D1 comprenne une première mémoire MCU destinée à stocker temporairement des blocs de données de contenu issus du serveur de contenus et transférés selon un débit élevé. Ainsi, il peut communiquer à l'application LC les blocs de données de contenu selon le débit qui est le mieux adapté à ses besoins et à la capacité de stockage de la mémoire tampon (ou cache) MT qu'elle comprend (notamment si cette capacité de stockage est relativement faible).

Cette première mémoire MCU est par exemple de type cache. Dans ce cas, le premier dispositif D1 constitue également un « proxy/cache » (équipement intermédiaire à mémoire cache).

En présence d'une première mémoire MCU, le module de synchronisation MS peut par exemple commencer par ordonner à son premier dispositif D1 de transférer vers l'application LC un nombre de blocs de données de contenu reçus fonction de la capacité de sa mémoire tampon MT. Il continue alors de stocker les blocs de données de contenu suivants dans la première mémoire MCU afin d'ordonner le transfert d'une partie au moins d'entre eux vers l'application LC lorsque sa mémoire tampon MT est de nouveau en mesure de les stocker. Cette possibilité concerne aussi bien le transfert selon un débit élevé en l'absence d'interruption de transfert de contenu(s), que le transfert selon un débit classique ou élevé consécutivement à une interruption de transfert de contenu(s).

On notera que le premier dispositif D1 n'a a priori pas connaissance de l'état de remplissage de la mémoire tampon MT de l'application LC. Il sait en revanche, grâce à un paramétrage, quel est le volume de données qui peut être envoyé en avance à l'application LC. Il peut se servir des informations de marquage temporel (ou « timestamp »), qui sont contenues dans les blocs de données (ou paquets) et qui permettent leur réordonnancement par l'application LC en vue de leur utilisation, afin de déterminer ceux qu'il doit envoyer à l'application. En l'absence de telles informations, le module de synchronisation MS du premier dispositif D1 peut se baser sur le moment où chaque bloc de données de contenu a été reçu au niveau du second dispositif D2 pour déterminer quand il doit l'envoyer vers l'application LC. Ainsi, le module de synchronisation MS peut transférer immédiatement vers l'application LC, sans les stocker, les blocs de données de contenu reçus qui doivent être utilisés en premier et que sa mémoire tampon MT est en mesure de stocker, et stocker dans la première mémoire MCU les blocs de données de contenu reçus qui seront utilisés ultérieurement par l'application LC. En variante, on peut envisager que le module de synchronisation MS stocke automatiquement dans la première mémoire MCU tous les blocs de données de contenu reçus, et ordonne leur transfert vers l'application LC en fonction de leur ordre d'utilisation défini par leur marquage temporel.

Lorsque des blocs de données de contenu sont stockés dans la première mémoire MCU (par exemple en attente de transfert vers l'application LC), le premier dispositif D1 peut continuer à alimenter l'application LC avec ces blocs de données de contenu stockés lorsque survient une interruption de transfert de contenu(s) vers son téléphone mobile UE. Si tous les blocs de données de contenu stockés ont été transférés vers l'application LC avant la fin de l'interruption de transfert de contenu(s), alors, comme indiqué précédemment, le module de synchronisation MS transfère des blocs de données de contenu factices vers l'application LC jusqu'à ce que l'interruption soit finie. Pendant cette interruption, le second dispositif D2 stocke les blocs de données de contenu transmis par le serveur de contenus SC, afin de les transférer vers le premier dispositif D1 (de préférence selon un débit très élevé) à la fin de l'interruption.

Lorsque les blocs de données de contenu sont de nouveau transmis à l'application LC selon leur débit d'utilisation normal, consécutivement à une phase d'interruption, cela occasionne un décalage temporel d'affichage pour l'utilisateur du téléphone mobile UE.

Dans une variante, consécutivement à une phase d'interruption, les blocs de données de contenu qui ont été stockés dans la première mémoire MCU du premier dispositif D1 peuvent être de nouveau transmis à l'application LC selon un débit élevé afin d'être utilisés dans un mode dit accéléré (ou « fast-forward »). Les images (et le son) défini(e)s par les blocs de données de contenu sont alors affichées (et diffusés) à une vitesse supérieure à la normale. Ce mode accéléré peut être requis par l'utilisateur du téléphone mobile UE auprès de l'application LC, cette dernière adressant alors au premier dispositif D1 une requête de transfert accéléré correspondante qui est prise en charge par son module de synchronisation MS. Le mode accéléré peut être interrompu soit à la demande de l'utilisateur du téléphone mobile UE (auprès de l'application LC), et dans ce cas l'application LC adresse au premier dispositif D1 une requête correspondante qui est prise en charge par son module de synchronisation MS, soit automatiquement lorsque la première mémoire MCU du premier dispositif D1 est vide.

On notera que l'utilisation de ce mode accéléré peut nécessiter que le module de synchronisation MS modifie l'un au moins des champs d'entête contenus dans les blocs de données de contenu (par exemple des paquets RTP) afin qu'ils puissent être compatibles avec le fonctionnement de certaines applications. Par exemple, le module de synchronisation MS peut avoir à modifier les marquages temporels des blocs (ou paquets) afin de compenser le décalage temporel introduit par la phase d'interruption de la couverture radio du téléphone mobile UE (notion de réactualisation).

Dans une autre variante, consécutivement à une phase d'interruption et en présence d'un transfert de contenu(s) en direct, le module de synchronisation MS peut être chargé de ne transférer vers l'application LC que les blocs de données de contenu qui peuvent être utilisés en quasi-synchronisme avec le serveur de contenus SC. A cet effet, il doit analyser les marquages temporels des blocs (ou paquets) reçus afin de ne transférer vers l'application LC que les blocs qui comportent un marquage temporel représentant un horaire sensiblement contemporain de l'horaire courant. C'est ce que l'homme de l'art appelle le mode « saut » (ou « skip mode »).

On notera que dans le cas de contenus vidéos, le module de synchronisation MS doit également analyser les types (I, B ou P) des trames vidéos auxquelles appartiennent les blocs, afin de ne transférer que les blocs pertinents. Il est en effet rappelé que certains types de trame ne peuvent être utilisés qu'à condition qu'au moins un autre type de trame ait été préalablement reçu. Par exemple, dans le mode « skip » en vidéo la resynchronisation ne peut se faire que sur une trame de type I. D'une manière générale, selon le cas rencontré, le module de synchronisation MS peut avoir à analyser les trames suivant des règles données.

On peut également envisager que le module de synchronisation MS transfère vers l'application LC des copies de certains au moins des blocs de données de contenu qui sont stockés dans la première mémoire MCU, plutôt que d'extraire ces blocs de la première mémoire MCU puis de les transférer. Le premier dispositif D1 peut ainsi conserver dans sa première mémoire MCU, pendant un certain temps, des blocs de données de contenu afin qu'ils puissent être éventuellement de nouveau transférés vers l'application LC à sa requête. Cela peut par exemple permettre à un utilisateur de revoir une séquence d'images vue en mode accéléré ou bien de voir en mode accéléré une séquence d'images vue en mode normal.

A cet effet, le module de synchronisation MS peut par exemple adjoindre un marquage choisi à chaque bloc de données de contenu qui est stocké dans la première mémoire MCU et qui fait l'objet d'une copie. Il est alors en mesure, lorsque l'application LC le requiert, de lui retransmettre certains au moins des blocs de données de contenu marqués. Par exemple le mot « vu » (ou « viewed ») peut être adjoint aux blocs de données de contenu stockés.

Grâce à ce marquage spécifique, lorsque la première mémoire MCU est pleine, le module de synchronisation MS peut stocker un bloc nouvellement reçu à la place du bloc marqué déjà utilisé dont le marquage temporel définit l'horaire le plus ancien.

On notera que pendant la durée d'une session les modules de contrôle MC1 et MC2 des premier D1 et second D2 dispositifs peuvent s'échanger des messages ou requêtes selon des protocoles internes qui ne sont pas forcément ceux utilisés pour le transfert classique, comme par exemple RTCP ou RTSP (pour « Real Time Streaming Protocol »). A titre d'exemple, lorsque la première mémoire MCU du premier dispositif D1 est pleine, son module de contrôle MC1 peut par exemple générer à destination du module de contrôle MC2 du second dispositif D2 une requête lui demandant de stocker temporairement les blocs de données de contenu afin de les lui transférer ultérieurement. Les messages devant être échangés entre l'application LC et le serveur de contenus SC, lesquels sont interceptés par le premier dispositif D1 ou le second dispositif D2, sont cependant conformes au protocole qui est classiquement utilisé pour le transfert de contenu(s).

Le premier dispositif D1, et notamment ses modules de contrôle MC1 et de synchronisation MS et sa première mémoire MCU, peuvent être réalisés sous la forme de circuits électroniques, de modules logiciels (ou informatiques), ou d'une combinaison de circuits et de logiciels.

De même, le second dispositif D2, et notamment ses modules de contrôle MC2 et de détection MD et sa seconde mémoire MCR, peuvent être réalisés sous la forme de circuits électroniques, de modules logiciels (ou informatiques), ou d'une combinaison de circuits et de logiciels.

L'invention ne se limite pas aux modes de réalisation de système de contrôle, de terminal de communication radio et d'équipement de réseau décrits ci-avant, seulement à titre d'exemple, mais elle englobe toutes les variantes que pourra envisager l'homme de l'art dans le cadre des revendications ci-après.

## Revendications

1. Système de contrôle de session(s) de transmission de contenus entre un serveur de contenus (SC) et au moins un terminal de communication radio (UE) disposant d'une application (LC) utilisant des contenus et connecté à un réseau de communication radio (RR) à couverture radio discontinue et mettant en oeuvre un mécanisme de transfert discontinu de contenus, **caractérisé en ce qu'**il comprend des premier (D1) et second (D2) dispositifs respectivement implantés dans ledit terminal (UE) et dans ledit réseau (RR) et agencés, lorsqu'une session de transmission de contenus doit être établie entre ladite application (LC) et ledit serveur de contenus (SC), pour se connecter l'un à l'autre et pour se faire passer respectivement pour ledit serveur de contenus (SC) auprès de ladite application (LC), de manière à continuer à lui transmettre des blocs de données de contenu en cas d'interruption de leur transfert, et pour ladite application (LC) auprès dudit serveur de contenus (SC), de manière à établir ladite session à sa place, à transmettre audit serveur de contenus (SC) des messages relatifs à la session, à stocker temporairement des blocs de données de contenu transmis par le serveur de contenus (SC) en cas d'interruption de transfert et pour les transférer vers ledit premier dispositif (D1) dès que cette interruption de transfert se termine, pour qu'il les transfère à son tour vers ladite application (LC).

2. Système selon la revendication 1, **caractérisé en ce que** ledit second dispositif (D2) comprend une mémoire (MCR) propre à stocker temporairement des blocs de données de contenu transmis par ledit serveur de contenus (SC), et des moyens de contrôle (MC2) agencés, en cas de détection d'une interruption de transfert vers ledit terminal (UE), pour ordonner le stockage dans ladite mémoire (MCR) des blocs de données de contenu transmis par ledit serveur de contenus (SC), et en cas de détection de la fin de cette interruption de transfert, pour extraire certains au moins des blocs de données de contenu stockés dans ladite mémoire (MCR) afin d'ordonner leur transfert selon un débit élevé vers ledit premier dispositif (D1).

3. Système selon la revendication 2, **caractérisé en ce que** ledit second dispositif (D2) comprend des moyens de détection (MD) agencés pour analyser l'état de la connexion entre lesdits premier (D1) et second (D2) dispositifs et pour alerter lesdits moyens de contrôle (MC2) en cas de détection d'un début ou d'une fin d'interruption de transfert vers ledit terminal (UE).

4. Système selon l'une des revendications 1 à 3, **caractérisé en ce que** ledit premier dispositif (D1) comprend une mémoire (MCU) propre à stocker temporairement des blocs de données de contenu issus dudit serveur de contenus (SC), et des moyens de synchronisation (MS) agencés, en cas de réception de blocs de données de contenu consécutivement à une interruption de transfert, pour transférer vers ladite application (LC) les blocs de données de contenu devant être utilisés en premier et pour stocker temporairement dans ladite mémoire (MCU) des blocs de données de contenu reçus lorsqu'une mémoire tampon (MT) de ladite application (LC) est pleine, de manière à lui transférer une partie au moins d'entre eux lorsque sa mémoire tampon (MT) est en mesure de les stocker.

5. Système selon la revendication 4, **caractérisé en ce que** lesdits moyens de synchronisation (MS) sont agencés, en cas de réception de blocs de données de contenu transmis selon un débit élevé, pour transférer une partie au moins de ces blocs de données de contenu vers ladite application (LC) compte tenu de la capacité de stockage de sa mémoire tampon (MT), puis pour stocker temporairement dans ladite mémoire (MCU) les blocs de données de contenu suivants de manière à les transférer vers ladite application (LC), en commençant par ceux devant être utilisés en premier.

6. Système selon l'une des revendications 4 et 5, **caractérisé en ce que** lesdits moyens de synchronisation (MS) sont agencés pour transférer des blocs de données de contenu vers ladite application (LC) selon un débit égal à leur débit d'utilisation normal dans ladite application (LC).

7. Système selon l'une des revendications 4 à 6, **caractérisé en ce que** lesdits moyens de synchronisation (MS) sont agencés pour transférer des blocs de données de contenu vers ladite application (LC) selon un débit strictement supérieur à leur débit d'utilisation normal dans ladite application (LC).

8. Système selon l'une des revendications 4 à 7, **caractérisé en ce que** lesdits moyens de synchronisation (MS) sont agencés, en présence de contenus transmis en direct, pour ne transférer vers ladite application (LC) que les blocs de données de contenu qui peuvent être utilisés par ladite application (LC) en quasi-synchronisme avec ledit serveur de contenus (SC).

9. Système selon l'une des revendications 4 à 8, **caractérisé en ce que** lesdits moyens de synchronisation (MS) sont agencés, en cas d'interruption de transfert, pour générer des blocs de données de contenu factices à destination de ladite application (LC), de sorte qu'elle n'interrompe pas ladite session et qu'elle effectue une action représentative de ladite interruption de transfert.

10. Système selon l'une des revendications 4 à 9, **caractérisé en ce que** lesdits moyens de synchronisation (MS) sont agencés pour transférer vers ladite application (LC) des copies de certains au moins des blocs de données de contenu qui sont stockés dans ladite mémoire (MCU) et pour adjoindre un marquage choisi à chaque bloc de données de contenu stocké dans ladite mémoire (MCU) et ayant fait l'objet d'une copie, de manière à pouvoir retransmettre sur ordre à ladite application (LC) certains au moins des blocs de données de contenu marqués.

11. Terminal de communication radio (UE) propre à se connecter à un réseau de communication radio et comprenant une application (LC) utilisant des contenus, **caractérisé en ce qu'**il comprend un premier dispositif (D1) faisant partie d'un système de contrôle selon l'une des revendications précédentes.

12. Equipement de réseau (ER) pour un réseau de communication radio, **caractérisé en ce qu'**il comprend un second dispositif (D2) faisant partie d'un système de contrôle selon l'une des revendications 1 à 10.
